# FASCICULE DE BREVET EUROPEEN

(11) **EP 2 977 832 B1**
(45) Date de publication et mention de la délivrance du brevet: **30.08.2017**
(21) Numéro de dépôt: 14178227.6
(22) Date de dépôt: 23.07.2014
(51) Int. Cl.: G04B 19/22, G04B 19/26

(54) **PIÈCE D'HORLOGERIE POUVANT INDIQUER LE LEVER OU LE COUCHER DU SOLEIL EN TOUT POINT DU GLOBE**
UHR, DIE DEN SONNENAUF ODER DEN UNTERGANG AN JEDEM PUNKT DER ERDE ANZEIGEN KANN
TIMEPIECE CAPABLE OF INDICATING THE SUNRISE OR SUNSET AT ANY POINT ON THE GLOBE

(43) Date de publication de la demande: 27.01.2016
(73) Titulaire: The Swatch Group Research and Development Ltd., 2074 Marin (CH)
(72) Inventeur: Gilomen, Beat, 2540 Grenchen (CH); Willemin, Michel, 2515 Prêles (CH); Léchot, Dominique, 2732 Reconvilier (CH)
(74) Mandataire: Giraud, Eric

(56) Documents cités:
- WO-A1-02/082191
- CH-A1- 705 722
- DE-U- 7 014 354
- US-A1- 2002 131 329

## Description

### DOMAINE DE L'INVENTION

La présente invention concerne une pièce d'horlogerie comprenant un mouvement horloger et des moyens d'indication du lever et du coucher du Soleil tenant compte des variations saisonnières, lesdits moyens comprenant une sphère reproduisant le globe terrestre, un support, et un cercle monté sur le support et arrangé concentriquement à la sphère, le cercle étant agencé pour indiquer la position du terminateur terrestre, le cercle et la sphère étant agencés pour pouvoir pivoter l'un par rapport à l'autre selon deux axes perpendiculaires, un premier des deux axes correspondant à l'axe polaire du globe terrestre, et le second axe croisant le premier axe au centre de la sphère, le cercle étant libre de pivoter relativement au support autour du second axe, les moyens d'indication du lever et du coucher du Soleil comprenant encore une came annuelle présentant un profil représentatif de l'inclinaison du Soleil par rapport au plan équatorial et agencée pour être entraînée en rotation par le mouvement à raison d'une révolution par année, un suiveur de came agencé pour coopérer avec la came, et une liaison cinématique agencée pour relier le suiveur de came au cercle de manière à ce que le plan sous-tendu par le cercle fasse avec le premier axe un angle égal à l'angle d'inclinaison du Soleil par rapport au plan équatorial.

### ART ANTERIEUR

La durée du jour est le temps compris, chaque jour entre le moment où le limbe supérieur du Soleil apparait à l'est au-dessus de l'horizon, au lever du Soleil, jusqu'à sa disparition à l'ouest en dessous de l'horizon, lors du coucher du Soleil. Quelle que soit l'heure, il y a toujours une moitié de la surface du globe qui est éclairée par le Soleil, et une autre moitié qui est dans l'ombre. On appelle terminateur terrestre la ligne de démarcation entre la partie de la Terre qui est éclairée et celle qui est dans l'ombre. Géométriquement parlant, le terminateur terrestre est un grand cercle qui ceinture le globe terrestre. Ce grand cercle s'étend dans un plan perpendiculaire au plan de l'orbite terrestre autour du soleil (appelé le plan de l'écliptique). On peut encore noter que le centre de la Terre se trouve sur la droite d'intersection entre ces deux plans.

D'une façon générale, la durée du jour varie tout au long de l'année et dépend de la latitude. Cette variation est provoquée par l'inclinaison de l'axe de rotation de la Terre sur elle-même par rapport au plan de l'écliptique. Cette inclinaison correspond par définition à la latitude des tropiques qui est de ± 23° 27'. Comme on le sait bien, la durée du jour est au plus court lors du solstice de décembre dans l'hémisphère nord, et de juin dans l'hémisphère sud. Lors des équinoxes, la durée du jour est égale à celle de la nuit sur toute la Terre.

On connait déjà des pièces d'horlogerie correspondant à la définition donnée en préambule ci-avant. La figure 3 du modèle d'utilité allemand DE7014354 (U), notamment, décrit une horloge de table comportant une sphère qui reproduit le globe terrestre et qui est montée sur un axe vertical pour tourner au-dessus d'un support en forme de boitier. La face supérieure du support présente un cadran annulaire arrangé concentriquement à l'axe de la sphère et figurant un tour d'heures de 24 heures. Un mouvement horloger logé dans le support est prévu pour faire tourner le globe terrestre au-dessus du cadran au rythme d'un tour par 24 heures. Cette horloge de table connue comporte encore une coque hémisphérique légèrement plus grande que le globe terrestre et montée concentriquement à ce dernier de manière à l'entourer et à n'en laisser apparaître qu'une moitié. La coque hémisphérique est prévue pour permettre de distinguer, sur le globe terrestre, une demi-sphère éclairée par soleil d'une autre qui est dans l'ombre. La coque hémisphérique est en outre articulée sur deux montants verticaux de part et d'autre de la Terre. Elle peut ainsi pivoter autour d'un axe horizontal qui croise l'axe vertical qui porte le globe au centre de ce dernier. La coque est encore munie d'une crémaillère agencée pour coopérer avec un pignon faisant partie d'un mécanisme prévu pour commander l'angle d'inclinaison de la coque de façon à faire parcourir à cet angle, une fois par année dans un sens puis dans l'autre, la plage entière comprise entre les valeurs - et + 23,5°, pour reproduire l'effet de la variation de l'inclinaison du soleil au-dessus de l'équateur en fonction des saisons.

On comprendra que l'horloge de table décrite dans le document antérieur susmentionné reproduit la succession des jours et des nuits sur la Terre selon un point de vue qu'on pourrait qualifier de Copernicien. En effet, avec cette construction antérieure, c'est la Terre qui tourne sur elle-même, alors que l'ombre du Soleil ne fait que changer d'inclinaison en fonction des saisons. Bien qu'elle soit peut-être moins juste d'un point de vue scientifique, la représentation géocentrique selon laquelle nous nous trouvons au centre, alors que le Soleil nous tourne autour, est beaucoup plus conforme à notre intuition.

La demande de brevet CH 705 722 A1 divulgue une montre bracelet équipée d'un mécanisme permettant d'indiquer le lever et coucher du soleil sur une sphère dont l'axe peut être parallèle au cadran. Dans ce document l'élément de marquage indiquant la ligne séparatrice entre le jour et la nuit est une coque agencée pour représenter les variations saisonnières, mais cette coque est montée sur un bâti fixe.

### BREF EXPOSE DE L'INVENTION

Un but de la présente invention est de fournir une pièce d'horlogerie permettant de reproduire la succession des jours et des nuits sur la Terre conformément à un point de vue géocentrique. Elle atteint ce but en fournissant une pièce d'horlogerie conforme à la revendication 1 annexée.

On comprendra que, selon l'invention, le cercle figurant le terminateur terrestre tourne avec son support au rythme d'un tour par 24 heures autour de l'axe polaire du globe terrestre. De plus, le cercle est monté pivotant sur le support tournant, de manière à ce qu'il puisse également changer d'inclinaison par rapport à l'axe polaire. L'angle d'inclinaison du cercle est commandé par un arbre d'entraînement arrangé concentriquement au support tournant. L'arbre d'entraînement est actionné par le mouvement pour tourner à la même vitesse que le support, mais avec un certain déphasage. C'est la valeur du déphasage qui détermine l'inclinaison du cercle par rapport à l'axe polaire.

On comprendra que dans le présent contexte, l'expression « cercle » ne désigne pas forcément un cercle tout-à-fait complet. Il peut tout aussi bien s'agir d'un cercle qui présente au moins une coupure. En effet, selon l'invention, l'axe autour duquel le cercle est monté pivotant coupe perpendiculairement l'axe polaire du globe terrestre. Or, selon un mode de réalisation avantageux de l'invention, le globe terrestre est monté sur une tige qui s'étend concentriquement à l'axe polaire. Dans ces conditions, il est nécessaire que le cercle présente au moins une interruption pour permettre à la tige et au cercle de se croiser lorsque l'inclinaison du cercle par rapport à l'axe polaire passe par zéro. De plus, selon une variante préférée de ce dernier mode de réalisation, la tige qui porte la sphère est une tige traversante pivotée par ses deux extrémités. Comme on le verra encore plus loin, le cercle doit alors présenter deux coupures disposées à l'opposé l'une de l'autre, sur le même diamètre perpendiculaire à l'axe de pivotement du cercle.

Conformément à l'invention, un mécanisme différentiel permet de modifier le déphasage entre l'arbre d'entraînement et le support tournant. Le mécanisme différentiel comporte une première et une deuxième entrée, ainsi qu'une sortie. La première entrée du mécanisme différentiel est agencée pour être entraînée en rotation par le mouvement, et la sortie du mécanisme est reliée à l'arbre d'entraînement. La deuxième entrée du mécanisme différentiel est relié cinématiquement au suiveur de came, de sorte que les variations du profil de la came annuelle se reflètent par des variations correspondantes du déphasage de l'arbre d'entraînement.

Conformément à un mode de réalisation préféré de l'invention, la pièce d'horlogerie est une montre qui comprend un cadran, l'axe polaire X-X étant orienté parallèlement au plan du cadran. Cette caractéristique est originale. En effet, les pièces d'horlogerie connues qui comprennent des moyens d'indication du lever et du coucher du Soleil en tenant compte des variations saisonnières, sont en général des horloges de table. Dans ces horloges, l'axe polaire X-X est normalement arrangé verticalement. Bien que cette agencement donne satisfaction avec une horloge de table, il ne convient pas très bien pour une pièce d'horlogerie comme une montre dans laquelle l'affichage n'est visible que d'un seul côté à travers le verre de montre. En effet, la sphère qui reproduit le globe terrestre doit être suffisamment grande pour qu'il soit aisé de repérer, au moins approximativement, tout endroit de la planète. Or, l'espace exigu entre le cadran et le verre impose que le globe utilisé ait un faible encombrement. Pour permettre d'utiliser quand-même un globe d'une certaine dimension avec l'axe polaire orienté verticalement, la seule solution est d'aménager dans le cadran une ouverture en forme de puits pour recevoir la sphère. Un tel arrangement limite toutefois la visibilité, puisque l'hémisphère placé en bas est alors complètement invisible pour le porteur de la montre. C'est la raison pour laquelle, lorsque la pièce d'horlogerie est une montre comprenant un cadran, l'axe polaire X-X est de préférence orienté parallèlement au plan du cadran.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1 est une vue en plan de dessus d'une montre bracelet conforme à un mode de réalisation particulier de l'invention ;
- la figure 2 est une vue schématique en coupe de la montre bracelet de la figure 1 ;
- les figures 3A, 3B et 3C sont des vues partielles d'un mode de réalisation particulier des moyens d'indication du lever et du coucher du Soleil de l'invention. Les trois vues partielles montrent la sphère qui reproduit le globe terrestre, le support, et une coque qui est montée pivotante sur le support et qui est arrangée concentriquement à la sphère. Le support est de face dans la figure 3A, de profil dans la figure 3B et de trois-quarts dans la figure 3C ;
- la figure 4 est une vue partielle en coupe transversale des moyens d'indication du lever et du coucher du Soleil des figures 3A, 3B et 3C ; le support étant représenté de face comme dans la figure 3A ;
- la figure 5 est une vue en perspective d'un mode de réalisation particulier des moyens d'indication du lever et du coucher du Soleil tenant compte des variations saisonnières selon l'invention. La figure 5 montre notamment la liaison cinématique reliant le suiveur de came au cercle.

### DESCRIPTION DETAILLEE DE MODES DE REALISATION

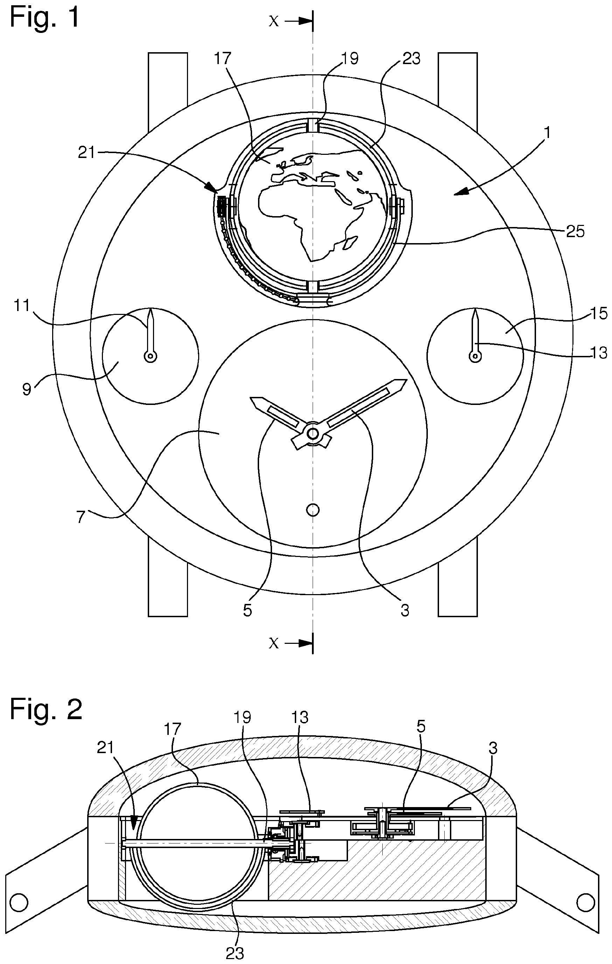

La montre illustrée dans les figures 1 et 2 comporte notamment un cadran principal désigné par la référence numérique générale 1. Le cadran principal porte trois petits cadrans (référencés 7, 9 et 15) pour fournir au porteur de la montre différentes informations. Il s'agit tout d'abord de l'heure qui est indiquée par deux aiguilles 3 et 5, respectivement des minutes et des heures, qui sont agencées pour tourner de manière conventionnelle en regard du premier petit cadran 7. La montre illustrée comporte également un calendrier dont l'affichage utilise les deux autres petits cadrans 9, 15. Ce calendrier ne sera pas décrit en détail puisqu'il ne fait pas l'objet de l'invention. Suffit de dire que l'affichage du quantième (de 1 à 31) (ou date) est assuré par une petite aiguille 13 agencée pour tourner au-dessus du petit cadran 15, et qu'une autre petite aiguille 11 est agencée pour fournir une indication du mois de l'année en coopération avec le troisième petit cadran 9.

Conformément à l'invention, la montre représentée comporte encore des moyens pour indiquer le lever et le coucher du Soleil en différents endroits de la Terre tout en tenant compte des variations saisonnières. A ce titre, la montre des figures 1 et 2 comporte encore une sphère 17 qui représente le globe terrestre. On peut voir que la sphère 17 est montée sur une tige traversante 19 qui est arrangée concentriquement à l'axe polaire X-X du globe terrestre. Dans le mode de réalisation illustré, la tige 19 est orientée parallèlement au plan du cadran, et ses deux extrémités sont engagées dans deux paliers (non référencés) que porte le bâti de manière à autoriser la sphère à tourner autour de l'axe polaire X-X. On peut voir également que la sphère est logée dans un puits 21 aménagé à 12 heures dans le cadran 1. De plus, l'axe polaire X-X du globe est superposé au diamètre 12 heures - 6 heures de la montre. De façon conventionnelle, le pôle nord du globe est orienté vers le haut (dans la direction de 12 heures).

Conformément à l'invention, les moyens pour indiquer le lever et le coucher du Soleil en différents endroits de la Terre comprennent encore un cercle 23 monté sur un support 25 et arrangé concentriquement à la sphère 17. Dans le mode de réalisation représenté, on peut voir que les moyens pour indiquer le lever et le coucher du Soleil comprennent, en guise de cercle, une coque 27 de forme hémisphérique qui est arrangée concentriquement à la sphère 17 de manière à masquer une moitié du globe terrestre. On comprendra que selon ce mode de réalisation particulier, la coque hémisphérique 27 présente un rebord sensiblement circulaire, et que ce rebord constitue le cercle 23 selon l'invention. C'est donc la position du rebord circulaire de la coque 27 qui indique la position du terminateur terrestre. Un avantage associé au fait d'utiliser une coque en forme de demi-sphère au lieu d'un simple anneau est de permettre de distinguer de manière évidente une partie du globe terrestre où il fait nuit d'une autre où il fait jour. La coque 27 peut par exemple être réalisée dans un matériau translucide ou transparent qui est de préférence légèrement teinté, de manière à donner l'impression que la partie du globe recouverte par la coque est plongée dans la nuit. Selon une autre variante non-représentée, la coque pourrait avoir la forme d'une sphère constituée par la réunion de deux demi-sphères ayant des teintes différentes, l'une figurant le jour et l'autre la nuit. La demi-sphère figurant le jour serait alors de préférence plus transparente que l'autre, de manière à laisser voir la surface du globe terrestre. On comprendra que selon cette dernière variante, les deux demi-sphères forment entre elles un joint sensiblement circulaire, et que ce joint constitue le cercle selon l'invention. Un autre avantage de cette dernière variante est qu'elle donne la possibilité représenter le Soleil au milieu de la demi-sphère figurant le jour. Ainsi, cette variante permet de fournir une montre qui indique à quel moment le Soleil se trouve au Zénith.

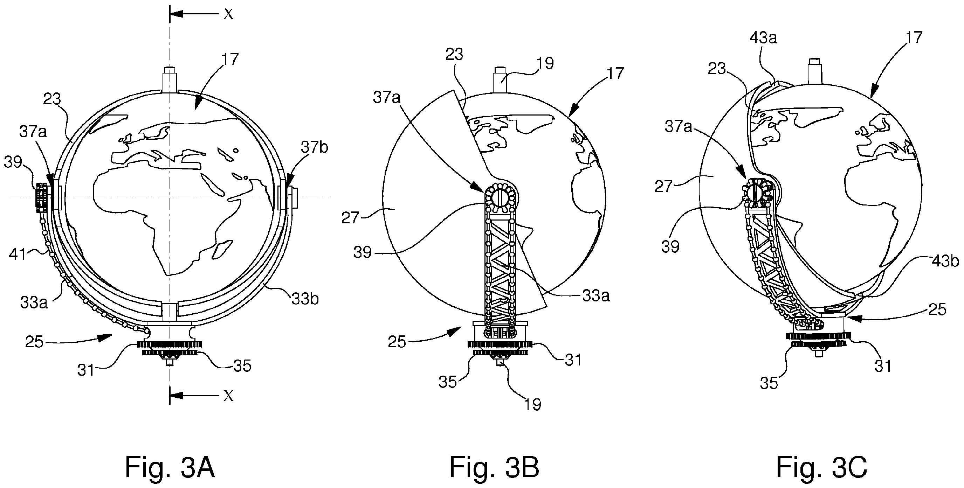

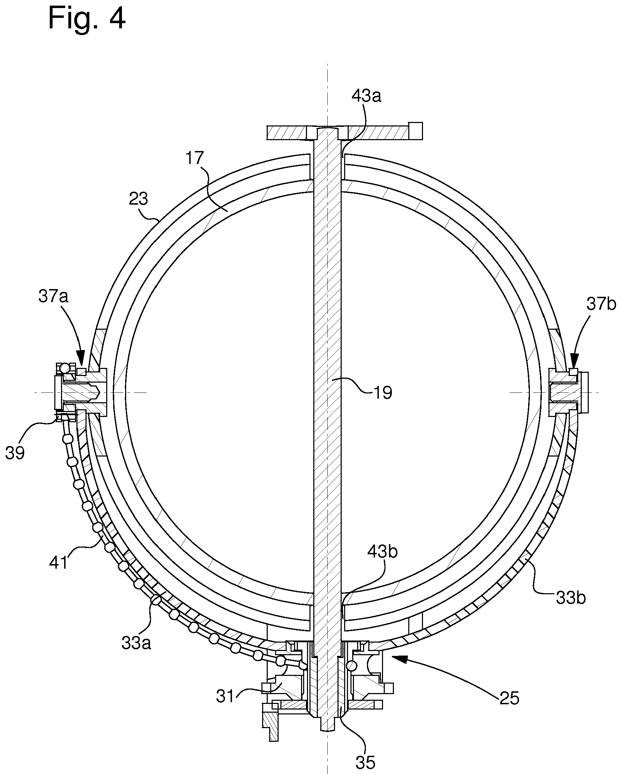

Les figures 3A, 3B, 3C et 4 sont des vues plus détaillées de l'ensemble formé par la sphère 17, le support 25 et la coque 27. Les trois vues 3A, 3B et 3C montrent respectivement la coque et le support tournés de face, de profil et de trois-quarts. La figure 4 illustre le même ensemble en coupe transversale et vu de face comme dans la figure 3A. En se référant toujours à la figure 3A, on peut voir que le support 25 a la forme générale d'une fourche avec un tronc court qui porte deux branches 33a et 33b qui s'étendent symétriquement de part et d'autre de la sphère. Dans la variante représentée, le support 25 possède un axe de symétrie qui est confondu avec l'axe polaire X-X du globe terrestre. En se référant maintenant à la vue agrandie en coupe de la figure 4, on peut voir que le tronc du support est constitué par une première roue à canon (référencée 31) à l'intérieur de laquelle passe une seconde roue à canon 35 ainsi que la tige 19. Dans le mode de réalisation illustré, la seconde roue à canon est intercalée entre la tige 19 et la première roue à canon 31. On comprendra toutefois, que selon une variante, ce pourrait être la première roue à canon qui serait placée à l'intérieur de la seconde roue à canon. On comprendra par ailleurs que, dans les deux variantes, les deux roues à canon 31, 35 et la tige 19 sont libres de tourner indépendamment les uns des autres.

On peut voir encore sur les figures que la coque 27 est montée pivotante entre les deux branches 33a, 33b au moyens de deux articulations référencées 37a et 37b et qui sont arrangées coaxialement dans le prolongement l'une de l'autre. La coque peut donc pivoter sur le support 25 selon un axe de rotation qui passe par les deux articulations. Cet axe de pivotement, qui croise l'axe polaire X-X au centre de la sphère 17, sera appelé ci-après l'axe écliptique et référencé Y-Y. Chacune des deux articulations 37a, 37b est constituée par un pivot porté par le rebord de la coque 27 et qui est inséré dans un palier fixé à l'extrémité d'une des branches 33a, 33b. On notera encore que les pivots qui sont insérés dans les deux paliers occupent des positions diamétralement opposées sur le grand cercle 23 constitué par le rebord de la coque.

En se référant à nouveau aux figures 3A et 4, on peut voir qu'une chaîne 41 relie la seconde roue à canon 35 à l'articulation 37a. Plus précisément, la chaîne 41 est tendue entre une gorge circulaire que présente la roue à canon 35 et un pignon (référencé 39) que porte l'articulation 37a. Le pignon 39 est fixé sur l'extrémité du pivot solidaire de la coque 27. On comprendra que dans le mode de réalisation illustré, la roue à canon 35 constitue l'arbre d'entraînement selon l'invention, et que la gorge circulaire, la chaîne 41 et le pignon 39 forment ensemble les moyens de transmission agencés pour relier l'arbre d'entraînement au cercle 23. Conformément à l'agencement qui vient d'être décrit, toute rotation de la roue à canon 35 par rapport au support 25 est transmise au pignon 39 par la chaîne 41. Ainsi, toute rotation de la roue à canon 35 relativement au support 25 provoque un pivotement correspondant de la coque 27 autour de l'axe écliptique Y-Y. On comprendra que le mécanisme qui vient d'être décrit permet de faire parcourir entièrement, dans un sens puis dans l'autre, la plage des valeurs comprises entre + et -23,5°, à l'angle d'inclinaison de la coque 27 relativement à l'axe polaire X-X. On comprendra que, grâce à cette construction, les moyens d'indication du lever et du coucher du Soleil sont capables de tenir compte de l'effet de la variation de l'inclinaison du Soleil au-dessus de l'équateur en fonction des saisons. En se référant plus particulièrement aux figures 3C et 4, on observe que le rebord 23 de la coque présente également deux encoches 43a et 43b arrangées en positions diamétralement opposées, à mi-distance des articulations 37a et 37b. On comprendra que la fonction des encoches 43a et 43b est de permettre le passage de la tige 19 lorsque la coque 27 est inclinée relativement à l'axe polaire X-X.

On a vu que, conformément à l'invention, le support 25 est agencé pour être entraîné par le mouvement de manière à tourner au rythme d'un tour par 24 heures autour du premier axe X-X. De plus, un arbre d'entraînement coaxial avec l'axe polaire X-X est agencé pour être entraîné en rotation par le mouvement par l'intermédiaire d'un mécanisme différentiel à la même vitesse que le support 25, mais avec un décalage angulaire par rapport au support. On comprendra que, dans le mode de réalisation illustré, l'arbre d'entraînement est constitué par la roue à canon 35, et que le mouvement fait tourner le support 25 par l'intermédiaire de la denture de la roue à canon 31.

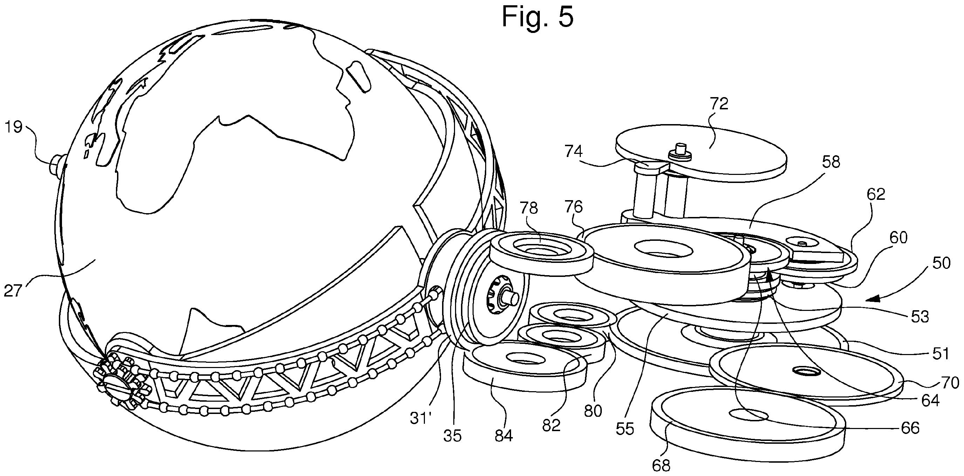

La figure 5 est une vue en perspective d'un mode de réalisation particulier des moyens d'indication du lever et du coucher du Soleil selon l'invention. On peut voir notamment sur la figure 5 un mécanisme à différentiel généralement référencé 50. Dans le mode de réalisation représenté, le différentiel 50 est constitué par un train d'engrenages planétaire qui comprend un mobile de première entrée formé d'une roue 51 et d'un pignon 53, un mobile de seconde entrée comportant un porte-satellite 55 solidaire d'un pont-suiveur de came 58, un mobile satellite pivotés entre le porte-satellite et le pont-suiveur de came et formé d'un pignon 60 et d'une roue 62 concentriques, et enfin, un mobile de sortie formé par une roue 64 et un pignon 66.

La figure 5 montre encore la roue des heures du mouvement (référencée 68) et un mobile intermédiaire 70 reliant la roue des heures à la première entrée du mécanisme différentiel 50. On peut voir encore une came annuelle 72 et un palpeur 74 porté par le pont-suiveur de came 58 qui constitue la seconde entrée du mécanisme différentiel. Précisons que le palpeur est rappelé contre la came 72 par un ressort non représenté. Deux renvois 76 et 78 sont en outre intercalés entre la sortie du différentiel et la roue à canon 35.

Le fonctionnement du mécanisme différentiel illustré dans la figure 5 va maintenant être expliqué. La roue des heures 68 est entraînée de manière conventionnelle à raison d'un tour toutes les 12 heures. La roue des heures engrène avec le mobile intermédiaire 70 qui entraîne à son tour la roue 51 de la première entrée du différentiel. Dans le mode de réalisation illustré, les rapports d'engrenage sont tels que la roue 51 accomplit un tour en 24 heures.

On a vu également que la roue 51 forme, avec le pignon 53, le mobile d'entrée du différentiel 50. On comprendra donc que le pignon 53 tourne également à la vitesse d'un tour par 24 heures. Le pignon 53 engrène avec le pignon 60 du mobile satellite. Ainsi, le mobile satellite est amené à tourner sur lui-même. La roue 62 du mobile satellite engrène à son tour avec le pignon 66 du mobile de sortie du différentiel (formé du pignon 66 et la roue 64), de sorte que le mobile de sortie est entraîné en rotation. Dans le mode de réalisation illustré, les rapports d'engrenage sont tels que le mobile de sortie tourne à la même vitesse que le mobile de la première entrée (formé par la roue 51 et le pignon 53), pour autant que la seconde entrée ne soit pas actionnée.

En se référant encore à la figure 5, on voit que trois renvois 80, 82 et 84 relient la roue 51 à la roue à canon 31 du support 25. On comprendra donc que la roue à canon 31 et le support 25 sont également entraînés à partir de la roue des heures à raison d'un tour toutes les 24 heures. Précisons que le sens de la rotation du support 25, et donc également de la coque 27, est choisi de manière à reproduire le mouvement apparent du Soleil tournant autour de la Terre. Dans ces conditions, le terminateur terrestre se déplace d'Est en Ouest sur le globe.

Conformément à l'invention, la came annuelle 72 est agencée pour être entraînée en rotation par le mouvement de la pièce d'horlogerie à raison d'une révolution par année, et son profil est représentatif de la variation, au cours de l'année, de l'inclinaison du Soleil par rapport au plan équatorial terrestre. On a vu encore que le pont-suiveur de came 58 est solidaire du porte-satellite 55 et qu'il forme avec ce dernier la seconde entrée du différentiel 50. De plus, le pont-suiveur de came porte un palpeur 74 agencé pour coopérer avec la came annuelle 72. On comprendra donc que le pont-suiveur de came et le porte-satellite 55 sont agencés pour pivoter ensemble concentriquement au différentiel en réponse à toute variation dans le profil de la came annuelle. Lorsque le porte-satellite pivote, le pignon 60 du mobile de satellite roule sur la denture du pignon 53 du mobile de première entrée du différentiel. Ainsi, de manière connue en soi, le pivotement du porte-satellite 55 se transmet au pignon 70 du mobile de sortie par l'intermédiaire de la roue 62 du mobile de satellite. Tout pivotement du porte-satellite 55 a donc pour effet de modifier brièvement la vitesse de rotation du mobile de sortie du différentiel. La vitesse du mobile de sortie est donc modulée par les variations que présente le profil de la came annuelle 72.

On a vu que, dans le mode de réalisation illustré, le mobile de sortie du différentiel (formé par le pignon 66 et la roue 64) tourne à la même vitesse que le mobile de première entrée 51, 53, aussi longtemps que le porte-satellite 55 demeure immobile. On comprendra donc que la roue 64 du mobile de sortie du différentiel est entraînée par le mouvement à la vitesse d'un tour toutes les 24 heures, et que le déphasage entre la roue 64 et le mobile de première entrée du différentiel est déterminé par la position angulaire du pont-suiveur de came 58. Comme le montre encore la figure 5, la roue 64 de sortie du différentiel est agencée pour entraîner la roue à canon 35 par l'intermédiaire des renvois 76 et 78, alors que la roue 51 du mobile de première entrée de différentiel est agencée pour entraîner la roue à canon 31 du support 25 par l'intermédiaire des trois renvois 80, 82 et 84. On comprendra donc que le déphasage entre la roue à canon 35 et support 25 est déterminé par le profil de la came annuelle 72. Comme on peut encore le voir sur la figure 5, le renvoi 84 et la première roue à canon 31 sont perpendiculaires l'une à l'autre, et le renvoi 78 et la seconde roue à canon 35 sont également perpendiculaires l'une à l'autre. On peut donc prévoir des engrenages coniques pour permettre à ces roues de coopérer.

On a vu que la roue à canon 35 est agencée pour commander l'inclinaison de la coque 27 par l'intermédiaire d'une chaîne 41 qui relie la roue à canon 35 à un pignon 39 solidaire d'un des deux pivots par lesquels la coque est tenue. Tant que la roue à canon 35 tourne à la même vitesse que le support 25, sa vitesse de rotation relativement au support est nulle. La chaîne 41 étant portée par le support, on comprendra qu'elle n'est pas actionnée tant que la roue à canon 35 est immobile relativement au support. *A contrario*, chaque fois que la came annuelle 72 fait pivoter le porte-satellite 55, ce pivotement provoque la rotation de la roue à canon 35 relativement au support 25. Cette rotation se transmet à la chaîne 41 et au pignon 39, de sorte que la came annuelle fait pivoter la coque 27 relativement à l'axe polaire X-X.

On a vu plus haut que, dans le mode de réalisation illustré par les figures 1 et 2, la sphère 17 figurant le globe terrestre est logée dans un puits 21 aménagé dans le cadran de sorte que seule une moitié du globe terrestre est visible à un instant donné. On a vu également que la sphère 17 est montée sur une tige centrale 19 qui est arrangée coaxialement avec l'axe polaire X-X. La tige est en outre orientée parallèlement au cadran 1 et ses deux extrémités sont engagées dans des paliers de sorte que le globe peut tourner sur lui-même de manière à changer la partie visible côté cadran.

Pour qu'il soit possible d'indiquer le lever et le coucher du Soleil en tout point du globe, il nécessaire que chaque point du globe ait la possibilité d'être visible au-dessus du cadran de la montre. On comprendra que, pour cela, il nécessaire que la sphère figurant le globe terrestre puisse tourner. Il est donc utile de prévoir que la montre comporte un organe de commande manuel actionnable par le porteur de la montre pour faire tourner le globe terrestre. De plus, selon une variante avantageuse, le verre de la montre peut présenter une petite ligne superposée à l'axe polaire X-X. La présence de cette ligne sur le verre rend plus aisé le réglage précis de l'orientation du globe terrestre. A partir des informations qui viennent d'être données, l'homme du métier n'aura aucune difficulté pour réaliser un mécanisme à commande manuelle permettant de régler l'orientation de la sphère 17.

On comprendra que diverses modifications et/ou améliorations évidentes pour un homme du métier peuvent être apportées au mode de réalisation qui fait l'objet de la présente description sans sortir du cadre de la présente invention définie par les revendications annexées. En particulier, la première entrée du différentiel 50 n'a pas besoin d'être entraînée par le mouvement à la vitesse d'un tour en 24 heures. De même, la sortie du différentiel 50 n'a pas besoin de tourner à la même vitesse que l'arbre d'entraînement 35. Des engrenages réducteurs ou multiplicateurs peuvent très bien être prévus entre les différents éléments de la chaîne cinématique pour adapter les vitesses de rotation.

## Revendications

1. Pièce d'horlogerie comprenant un mouvement horloger et des moyens d'indication du lever et du coucher du Soleil tenant compte des variations saisonnières, lesdits moyens comprenant une sphère (17) reproduisant le globe terrestre, un support (25), et un cercle (23) monté sur le support et arrangé concentriquement à la sphère, le cercle étant agencé pour indiquer la position du terminateur terrestre, le cercle (23) et la sphère (17) étant agencés pour pouvoir pivoter l'un par rapport à l'autre selon deux axes (X-X, Y-Y) perpendiculaires, un premier des deux axes, dit axe polaire (X-X), correspondant à l'axe polaire du globe terrestre, et le second axe, dit axe écliptique (Y-Y), croisant l'axe polaire au centre de la sphère (17), le cercle (23) étant libre de pivoter relativement au support (25) autour de l'axe écliptique ; les moyens d'indication du lever et du coucher du soleil comprenant une coque (27) arrangée concentriquement à la sphère (17) reproduisant le globe terrestre, la coque étant agencée pour délimiter une partie du globe terrestre où il fait nuit d'une autre partie où il fait jour, la coque (27) ayant la forme générale d'une demi-sphère et présentant un rebord de forme généralement circulaire, le rebord constituant le cercle (23) agencé pour indiquer la position du terminateur terrestre ; les moyens d'indication du lever et du coucher du Soleil comprenant encore une came annuelle (72) présentant un profil représentatif de l'inclinaison du Soleil par rapport au plan équatorial et agencée pour être entraînée en rotation par le mouvement à raison d'une révolution par année, un suiveur de came (74) agencé pour coopérer avec la came, et une liaison cinématique agencée pour relier le suiveur de came au cercle de manière à ce que le plan sous-tendu par le cercle fasse avec l'axe polaire (X-X) un angle égal à l'angle d'inclinaison du Soleil par rapport au plan équatorial ; dans laquelle:
- le support (25) est agencé pour être entraîné par le mouvement de manière à tourner au rythme d'un tour par 24 heures autour de l'axe polaire (X-X) en entraînant le cercle (23) ;
- les moyens d'indication du lever et du coucher du Soleil comprennent un mécanisme différentiel (50), et un arbre d'entraînement (35) concentrique à l'axe polaire (X-X) et relié à la sortie du mécanisme différentiel de manière à être entraîné en rotation par le mouvement par l'intermédiaire d'une première entrée du mécanisme différentiel à la même vitesse que le support (25), mais avec un décalage angulaire par rapport au support ;
- le suiveur de came (74) est relié à une seconde entrée du mécanisme différentiel (50) de manière à ce que le décalage angulaire de l'arbre d'entraînement soit représentatif de l'inclinaison du Soleil par rapport au plan équatorial, des moyens de transmission (39 ; 41) étant encore agencés entre l'arbre d'entraînement (35) et le cercle (23), de manière à ce qu'un changement du décalage angulaire se traduise par un changement correspondant de la valeur de l'angle entre le plan sous-tendu par le cercle et l'axe polaire (X-X) ;
**caractérisée en ce que** l'axe écliptique (Y-Y) est sensiblement colinéaire avec un diamètre du cercle (23), et **en ce que** la coque (27) porte deux pivots prolongeant les deux extrémités du diamètre, les deux pivots étant respectivement pivotés sur un premier et un second bras (33a, 33b) du support (25).

2. Pièce d'horlogerie comprenant des moyens d'indication du lever et du coucher du Soleil conforme à la revendication 1, **caractérisée en ce qu'**elle comprend un cadran (1), l'axe polaire (X-X) étant sensiblement orienté parallèlement au plan du cadran.

3. Pièce d'horlogerie comprenant des moyens d'indication du lever et du coucher du Soleil conforme à la revendication 1 ou 2, **caractérisée en ce que** la pièce d'horlogerie est une montre.

4. Pièce d'horlogerie comprenant des moyens d'indication du lever et du coucher du Soleil conforme à la revendication 1, **caractérisée en ce que** le rebord (23) de la coque (27) présente deux encoches (43a, 43b) disposées en positions diamétralement opposées à mi-distance entre les deux pivots.

5. Pièce d'horlogerie comprenant des moyens d'indication du lever et du coucher du Soleil conforme à l'une des revendications précédentes, **caractérisée en ce qu'**elle comporte un mécanisme de calendrier agencé pour indiquer le quantième (13) et le mois (11), et **en ce que** la came annuelle (72) est reliée cinématiquement au mécanisme de calendrier.

6. Pièce d'horlogerie comprenant des moyens d'indication du lever et du coucher du Soleil conforme à l'une des revendications précédentes, **caractérisée en ce que** le cercle (23) est relié cinématiquement à l'arbre d'entraînement (35) par une courroie (41) ou une chaîne.

7. Pièce d'horlogerie comprenant des moyens d'indication du lever et du coucher du Soleil conforme à l'une des revendications précédentes, **caractérisée en ce que** la liaison cinématique passe par la seconde entrée du mécanisme différentiel (50), laquelle comporte un porte-satellite (55) solidaire du suiveur de came (74).

8. Pièce d'horlogerie comprenant des moyens d'indication du lever et du coucher du Soleil conforme à la revendication 1, **caractérisée en ce que** le premier et le second bras (33a, 33b) du support (25) sont ajourés de manière à augmenter la part de la surface du globe terrestre visible à un instant donné.

9. Pièce d'horlogerie comprenant des moyens d'indication du lever et du coucher du Soleil conforme à la revendication 1, **caractérisée en ce que** le premier et le second bras (33a, 33b) du support (25) sont réalisés dans un matériau transparent de manière à augmenter la part de la surface du globe terrestre visible à un instant donné.

## Patentansprüche

1. Zeitmessgerät, umfassend ein Uhrwerk sowie Mittel zum Anzeigen des Sonnenaufgangs und des Sonnenuntergangs unter Berücksichtigung jahreszeitlicher Veränderungen, wobei die Mittel eine die Erdkugel nachbildende Kugel (17), einen Träger (25) und einen Ring (23), der an dem Träger montiert ist und konzentrisch zu der Kugel angeordnet ist, umfassen, wobei der Ring dafür ausgelegt ist, die Position der terrestrischen Tag-Nacht-Grenze anzuzeigen, wobei der Ring (23) und die Kugel (17) dafür ausgelegt sind, relativ zueinander um zwei zueinander senkrechte Achsen (X-X, Y-Y) drehbar zu sein, wobei eine erste der beiden Achsen, die Polachse (XX) genannt wird, der Polachse der Erdkugel entspricht und die zweite Achse, die Eklipsenachse (Y-Y) genannt wird, die Polachse im Mittelpunkt der Kugel (17) kreuzt, und der Ring (23) in Bezug auf den Träger (25) um die Eklipsenachse frei drehbar ist; wobei die Mittel zum Anzeigen des Sonnenaufgangs und des Sonnenuntergangs eine Schale (27) aufweisen, die konzentrisch zu der die Erdkugel nachbildenden Kugel (17) angeordnet ist und wobei die Schale dafür ausgelegt ist, einen Teil der Erdkugel, in dem es Nacht ist, von einem anderen Teil, in dem es Tag ist, abzugrenzen, wobei die Schale (27) die allgemeine Form einer Halbkugel hat und einen im Allgemeinen Ringförmigen Rand aufweist, und der Rand den Ring (23) bildet, der dafür ausgelegt ist, die Position der terrestrischen Tag-Nacht-Grenze anzugeben; wobei die Mittel zum Anzeigen des Sonnenaufgangs und des Sonnenuntergangs ferner einen Jahresnocken (72), der ein Profil aufweist, das die Neigung der Sonne in Bezug auf die Äquatorialebene repräsentiert, und der dafür ausgelegt ist, durch das Werk zu einer Umdrehung pro Jahr rotatorisch angetrieben zu werden, einen Nockenfolger (74), der dafür ausgelegt ist, mit dem Nocken zusammenzuwirken, und eine kinematische Verbindung umfassen, die dafür ausgelegt ist, den Nockenfolger mit dem Ring in einer Weise zu verbinden, dass die Ebene, die dem Ring zugrunde liegt, mit der Polachse (X-X) einen Winkel bildet, der gleich dem Neigungswinkel der Sonne in Bezug auf die Äquatorialebene ist; wobei:
- der Träger (25) dafür ausgelegt ist, durch das Werk in einer Weise angetrieben zu werden, dass er sich im Rhythmus einer Umdrehung pro 24 Stunden um die Polachse (X-X) dreht und dabei den Ring (23) antreibt;
- die Mittel zum Anzeigen des Sonnenaufgangs und des Sonnenuntergangs ein Differentialgetriebe (50) und eine zu der Polachse (X-X) konzentrische Antriebswelle (35) umfassen, die mit dem Ausgang des Differentialgetriebes verbunden ist, derart, dass sie durch das Werk über einen ersten Eingang des Differentialgetriebes mit der gleichen Geschwindigkeit wie der Träger (25), jedoch mit einem Winkelversatz in Bezug auf den Träger, rotatorisch angetrieben wird;
- der Nockenfolger (74) mit einem zweiten Eingang des Differentialgetriebes (50) in einer Weise verbunden ist, dass der Winkelversatz der Antriebswelle die Neigung der Sonne in Bezug auf die Äquatorialebene repräsentiert, wobei ferner Getriebemittel (39; 41) zwischen der Antriebswelle (35) und dem Ring (23) in einer Weise angeordnet sind, dass eine Änderung des Winkelversatzes in eine entsprechende Änderung des Wertes des Winkels zwischen der Ebene, die dem Ring zugrunde liegt, und der Polachse (X-X) umgesetzt wird;
**dadurch gekennzeichnet, dass** die Eklipsenachse (Y-Y) zu dem Durchmesser des Ringes (23) im Wesentlichen kolinear ist und dass die Schale (27) zwei Drehzapfen trägt, die die beiden Enden des Durchmessers verlängern, wobei die beiden Drehzapfen jeweils entsprechend an einem ersten und einem zweiten Arm (33a, 33b) des Trägers (25) drehbar sind.

2. Zeitmessgerät, umfassend Mittel zum Anzeigen des Sonnenaufgangs und des Sonnenuntergangs nach Anspruch 1, **dadurch gekennzeichnet, dass** es ein Zifferblatt (1) umfasst, wobei die Polachse (X-X) zu der Ebene des Zifferblatts im Wesentlichen parallel ausgerichtet ist.

3. Zeitmessgerät, umfassend Mittel zum Anzeigen des Sonnenaufgangs und des Sonnenuntergangs nach Anspruch 1 oder 2, **dadurch gekennzeichnet, dass** das Zeitmessgerät eine Uhr ist.

4. Zeitmessgerät, umfassend Mittel zum Anzeigen des Sonnenaufgangs und des Sonnenuntergangs nach Anspruch 1, **dadurch gekennzeichnet, dass** der Rand (23) der Schale (27) zwei Einschnitte (43a, 43b) aufweist, die an diametral gegenüberliegenden Positionen auf halber Strecke zwischen den beiden Drehzapfen angeordnet sind.

5. Zeitmessgerät, umfassend Mittel zum Anzeigen des Sonnenaufgangs und des Sonnenuntergangs nach einem der vorhergehenden Ansprüche umfasst, **dadurch gekennzeichnet, dass** es einen Kalendermechanismus umfasst, der dafür ausgelegt ist, den Monatstag (13) und den Monat (11) anzugeben, und dass der Jahresnocken (72) mit dem Kalendermechanismus kinematisch verbunden ist.

6. Zeitmessgerät, umfassend Mittel zum Anzeigen des Sonnenaufgangs und des Sonnenuntergangs nach einem der vorhergehenden Ansprüche, **dadurch gekennzeichnet, dass** der Ring (23) mit der Antriebswelle (35) durch einen Treibriemen (41) oder eine Kette kinematisch verbunden ist.

7. Zeitmessgerät, umfassend Mittel zum Anzeigen des Sonnenaufgangs und des Sonnenuntergangs nach einem der vorhergehenden Ansprüche, **dadurch gekennzeichnet, dass** die kinematische Verbindung den zweiten Eingang des Differentialgetriebes (50) durchläuft, der einen mit dem Nockenfolger (74) fest verbundenen Satellitenträger (55) aufweist.

8. Zeitmessgerät, umfassend Mittel zum Anzeigen des Sonnenaufgangs und des Sonnenuntergangs nach Anspruch 1, **dadurch gekennzeichnet, dass** der erste und der zweite Arm (33a, 33b) des Trägers (25) in einer Weise durchbrochen sind, dass der zu einem gegebenen Zeitpunkt sichtbare Teil der Oberfläche der Erdkugel vergrößert wird.

9. Zeitmessgerät, umfassend Mittel zum Anzeigen des Sonnenaufgangs und des Sonnenuntergangs nach Anspruch 1, **dadurch gekennzeichnet, dass** der erste und der zweite Arm (33a, 33b) des Trägers (25) aus einem lichtdurchlässigen Material hergestellt sind, derart, dass der zu einem gegebenen Zeitpunkt sichtbare Teil der Oberfläche der Erdkugel vergrößert wird.

## Claims

1. Timepiece comprising a clock movement and means for indicating the sunrise and sunset taking into account seasonal variations, said means comprising a sphere (17) representing the Earth, a support (25), and a circle (23) mounted on the support and arranged concentrically to the sphere, wherein the circle is arranged to indicate the position of the Earth's terminator, the circle (23) and the sphere (17) are arranged to be able to pivot in relation to one another around two perpendicular axes (X-X, Y-Y), a first of the two axes, referred to as polar axis (X-X), corresponding to the polar axis of the Earth, and the second axis, referred to as ecliptic axis (Y-Y), crossing the polar axis at the centre of the sphere (17), wherein the circle (23) is free to pivot in relation to the support (25) around the ecliptic axis; the means for indicating the sunrise and sunset comprising a shell (27) arranged concentrically to the sphere (17) that represents the globe, wherein the shell is arranged to delimit a part of the globe where it is night time from another part where it is daytime, the shell (27) having the general shape of a half-sphere and having a generally circular edge, wherein the edge forms the circle (23) arranged to indicate the position of the Earth's terminator; the means for indicating the sunrise and sunset also comprise a year cam (72) having a profile representing the inclination of the sun in relation to the equatorial plane and arranged to be driven in rotation by the movement at a rate of one revolution per year, a cam follower (74) arranged to cooperate with the cam, and a kinematic link arranged to connect the cam follower to the circle so that with the polar axis (X-X) the plane subtended by the circle forms an angle equal to the angle of inclination of the sun in relation to the equatorial plane, wherein
• the support (25) is arranged to be driven by the movement in order to revolve at the rate of one revolution every 24 hours around the polar axis (X-X) driving the circle (23);
• the means for indicating the sunrise and sunset comprise a differential mechanism (50) and a drive shaft (35) concentric to the polar axis (X-X) and connected to the output of the differential mechanism so as to be driven in rotation by the movement by means of a first input of the differential mechanism at the same rate as the support (25) but with an angular displacement in relation to the support;
• the cam follower (74) is connected to a second input of the differential mechanism (50) such that the angular displacement of the drive shaft represents the inclination of the sun in relation to the equatorial plane, wherein transmission means (39; 41) are also arranged between the drive shaft (35) and the circle (23) so that a change in angular displacement leads to a corresponding change to the value of the angle between the plane subtended by the circle and the polar axis (X-X);
**characterised in that** the ecliptic axis (Y-Y) is substantially collinear with a diameter of the circle (23), and **in that** the shell (27) bears two pivots extending the two ends of the diameter, wherein the two pivots are pivoted on a first and a second arm (33a, 33b) respectively of the support (25).

2. Timepiece comprising means for indicating the sunrise and sunset according to claim 1, **characterised in that** it comprises a dial (1), wherein the polar axis (X-X) is oriented substantially parallel to the plane of the dial.

3. Timepiece comprising means for indicating the sunrise and sunset according to claim 1 or 2, **characterised in that** the timepiece is a watch.

4. Timepiece comprising means for indicating the sunrise and sunset according to claim 1, **characterised in that** the edge (23) of the shell (27) has two slots (43a, 43b) arranged in diametrically opposed positions halfway between the two pivots.

5. Timepiece comprising means for indicating the sunrise and sunset according to one of the preceding claims, **characterised in that** it comprises a calendar mechanism arranged to indicate the days of the month (13) and the month (11), and **in that** the year cam (72) is connected kinematically to the calendar mechanism.

6. Timepiece comprising means for indicating the sunrise and sunset according to one of the preceding claims, **characterised in that** the circle (23) is connected kinematically to the drive shaft (35) by a belt (41) or a chain.

7. Timepiece comprising means for indicating the sunrise and sunset according to one of the preceding claims, **characterised in that** the kinematic link passes through the second input of the differential mechanism (50), which comprises a planet wheel carrier (55) integral to the cam follower (74).

8. Timepiece comprising means for indicating the sunrise and sunset according to claim 1, **characterised in that** the first and second arms (33a, 33b) of the support (25) are cut away in order to increase the portion of the surface of the globe that is visible at a given moment.

9. Timepiece comprising means for indicating the sunrise and sunset according to claim 1, **characterised in that** the first and second arms (33a, 33b) of the support (25) are made from a transparent material in order to increase the portion of the surface of the globe that is visible at a given moment.
